# EUROPÄISCHE PATENTSCHRIFT

(11) **EP 3 151 657 B1**
(45) Veröffentlichungstag und Bekanntmachung des Hinweises auf die Patenterteilung: **30.05.2018**
(21) Anmeldenummer: 15736165.0
(22) Anmeldetag: 05.06.2015
(51) Int. Cl.: A61D 17/00, H04L 29/08, A01K 11/00, A01K 29/00

(54) **DATENNETZWERK FÜR DIE ÜBERWACHUNG VON TIEREN**
DATA NETWORK FOR MONITORING ANIMALS
RÉSEAU DE DONNÉES POUR LA SURVEILLANCE D'ANIMAUX

(30) Priorität: 05.06.2014 AT 4472014; 22.09.2014 AT 7182014
(43) Veröffentlichungstag der Anmeldung: 12.04.2017
(73) Patentinhaber: Smartbow GmbH, 4675 Weibern (AT)
(72) Erfinder: AUER, Wolfgang, 4675 Weibern (AT)
(86) Internationale Anmeldenummer: PCT/AT2015/000084
(87) Internationale Veröffentlichungsnummer: WO 2015/184479

(56) Entgegenhaltungen:
- EP-A2- 0 109 184
- JP-A- 2011 072 452

## Beschreibung

Die Erfindung betrifft ein Datennetzwerk für die automatische Überwachung von freiwilligen Verhaltensweisen einzelner Tiere einer Tierherde.

Vor allem wenn Nutztiere wie Rinder oder Zuchtschweine in größeren Herden gehalten werden, werden manche Verhaltensweisen der Tiere automatisch überwacht und abhängig von Erkenntnissen daraus werden Handlungen abgeleitet. Beispiele sind: Das Bewegungsverhalten von weiblichen Rindern oder Schweinen wird überwacht und ausgewertet um Brunst zu erkennen. Die Häufigkeit des Aufsuchens von Futterstellen wird überwacht um Rückschlüsse auf die Gesundheit machen zu können und um Futtermenge und Futterzusammensetzung zu optimieren. Es wird automatisch aufgezeichnet, wenn eine Kuh einen Melkstand aufsucht um erfahren zu können, wieviel Milch das jeweilige Tier gibt, um daraus weitere Handlungserfordernisse abzuleiten.

Die WO 2014/019791 A1 beschreibt ein Verfahren um die Brünstigkeit beispielsweise von Kühen automatisch zu erkennen. Die Tiere werden bezüglich Bewegungsaktivität und Nähe zu anderen Tieren automatisch überwacht und erhöhte Bewegungsaktivität bei gleichzeitiger vermehrter Nähe zu anderen Tieren wird automatisch als Indiz dafür gewertet, dass ein Tier brünstig ist. Gegebenenfalls wird durch das System eine Ausgabe generiert. Als Mittel für die Überwachung werden laufendes Filmen mit parallel laufender automatischer Bildverarbeitung und optische Mustererkennung vorgeschlagen, ebenso wie die Anwendung von auf Funk basierenden Identifizierungs- und Sensortechnologien wie insbesondere RFID-Transponder und RFID-Lesegeräte.

In der DE 37 02 465 A1 wird schon 1988 vorgeschlagen, Kühe mit einem Identifizierungsmittel zu versehen und am Eingang zu einem Melkbereich einen Sensor vorzusehen, welcher das Identifizierungsmittel auslesen kann, wenn sich eine Kuh nähert. Durch eine Datenverarbeitungsanlage, welche die Sensorergebnisse auswertet, wird in Abhängigkeit von einstellbaren Vorgaben entschieden, ob die Kuh zum gegebenen Zeitpunkt in den Melkstand darf oder nicht und dementsprechend wird ein steuerbares Tor geöffnet oder nicht. Identifizierungsmittel und Sensor sind nicht näher beschrieben; heutzutage denkt man bei derartigen Anwendungen vor allem an RFID-Transponder als Identifizierungsmerkmal an den Kühen und an ein RFID-Lesegerät als Sensor am Eingang zum Melkbereich.

In der US 2012234245 A1 wird vorgeschlagen, das Identifizieren von Kühen an den einzelnen Plätzen eines Serienmelkstandes mittels Funkortung durchzuführen. Jede der Kühe trägt dazu einen Knoten des Funkortungssystems, welcher in dem System auch eine eindeutige Kennung hat. Nahe am Melkstand sind mehrere Knoten in bekannter Position fix montiert. Aus den messbaren Laufzeiten bzw. den messbaren Unterschieden zwischen den Laufzeiten der Signale die zwischen Knoten bekannter, fixer Position und einem beweglichen, an einer Kuh befindlichen Knoten ausgetauscht werden, wird die Position des beweglichen Knotens berechnet und damit darauf geschlossen, an welchem Platz des Serienmelkstandes sich die den beweglichen Knoten tragende Kuh befindet.

Die WO 2013/188895 beschreibt ein Verfahren für die Aufzeichnung von Daten bezüglich einer medizinischen Manipulation, wie typischerweise dem Verabreichen einer Injektion, an einem Tier. Sowohl das Tier als auch die Manipulationsvorrichtung (Injektionsgerät) sind mit jeweils einer Sendevorrichtung ausgestattet, in welcher die Identität des Tieres bzw. der Manipulationsvorrichtung durch eine Kennung registriert ist. Beim Durchführen der Manipulation wird eine Serie von Datenübertragungen ausgelöst, durch welche diese Identitäten zusammen mit der Mitteilung, dass eine Manipulation zum gegebenen Zeitpunkt stattgefunden hat, an eine zentrale Datenverarbeitungsanlage mitgeteilt werden. Durch eine erste Datenübertragung zwischen den einzelnen Sendevorrichtungen untereinander wird auch definiert festgestellt, dass sie in einer gemeinsamen Manipulation zusammenwirken. Eine diesbezügliche Datenübertragung wird ausgelöst, wenn das Manipulationsgerät mit dem Tier in direktem Kontakt ist, wobei als Übertragungsweg der Körper des Tieres dient.

Für derartige Datenübertragung bei welcher Information bedeutende elektrische Signale auch über den Körper von lebenden Wesen übertragen werden, wird mancherorts - und des Weiteren auch in diesem Dokument - der Begriff "Body-coupled communication", abgekürzt "BCC" verwendet. Ähnlich verwendet wird auch oft der Begriff "Body Area Network", abgekürzt "BAN". Kennzeichnend ist, dass in einem geschlossenen elektrischen Wechselstromkreis ein Sender, der Körper eines menschlichen oder tierischen Wesens, und ein Empfänger hintereinander geschaltet sind, wobei Sender und Empfänger jeweils zwei Pole aufweisen und wobei bei zumindest einem der beiden Geräte, ein Pol ein Anschluss einer Kapazität (also eines elektrischen Kondensators) ist, deren zweiter Anschluss Erde, also die Umgebung ist und wobei der zweite Anschluss des Senders oder Empfängers an dem menschlichen oder tierischen Körper entweder direkt - also galvanisch verbunden - anliegt, oder über eine weitere Kapazität anliegt. Die Basisfrequenz des Wechselstromkreises liegt dabei im Normalfall in der Größenordnung von zehn Kilohertz bis ein Megahertz.

Ein bekanntes Anwendungsbeispiel betrifft das Sperren einer diesbezüglich ausgerüsteten Autotür, welches ausgelöst werden kann indem eine Person die ein elektronisches Gerät als Schlüssel mitführt, welches über den Körper der Person eine Identifizierung aussendet, das Auto berührt.

Mit der EP 109184 A2 wird schon 1984 (Priorität 1982) der Vorschlag veröffentlicht, BCC (Bedeutung siehe obige Erklärung) für Zugangskontrolle zu Geräten anzuwenden. Eine Person trägt dazu ein BCC-fähiges Sendegerät. Sobald die Person das Gerät, zu welchem der Zugang kontrolliert ist und welches einen BCC-fähigen Empfänger beinhaltet, berührt, wird ein Identifikationscode an den Empfänger gesandt. Der Code wird geprüft und wenn er einen zulässigen Schlüssel bedeutet, wird Zugang zu dem Gerät freigeschaltet. Das am Körper der Person zu tragende Sendegerät kann beispielsweise eine speziell ausgestattete Armbanduhr sein. Sie liegt mit einem Kontakt an der Haut der sie tragenden Person an. Eine zweite großflächige Kontaktfläche befindet sich an der Außenseite des Uhrbandes; sie bildet eine Elektrode eines Kondensators zu welchem die zweite Elektrode die Erde ist und zu welchem das zugehörige Dielektrikum die Umgebungsluft ist. Das Empfangsgerät liegt mit einer Elektrode an Erde (Masse) an. Eine zweite Elektrode ist jene Fläche, welche jene Person die Zugang zu dem Gerät sucht, für den Zweck der Zugangskontrolle berühren muss. Sobald die Person diese Elektrode berührt, ist ein Stromkreis, in welchem Sender, besagter Kondensator, Erde, Empfänger und Körper der Person, hintereinander geschaltet sind, geschlossen, und die für die Identitätsprüfung erforderliche Datenübertragung durch codierten Stromfluss kann starten.

In der DE 696 23 115 T2 (Priorität 1995) wird das aus der EP 109184 A2 bekannte Prinzip für BCC dahingehend verbessert, dass weder Sender noch Empfänger eine galvanische leitende elektrische Verbindung zu jenem Körper eines Menschen oder Tieres brauchen, welcher Teil des Stromkreises ist, sondern dass die diesbezügliche elektrische Verbindung auch ein kapazitiver elektrischer Widerstand sein kann, dass also der besagte Körper Elektrode eines elektrischen Kondensators ist, zu dem die zweite Elektrode galvanisch mit dem Sender oder Empfänger verbunden ist (bzw. Teil davon ist). Es reicht damit für das Herstellen der Verbindung aus, dass im Distanzbereich, also im Dielektrikum zwischen dem Sender oder Empfänger einerseits und dem Körper des Menschen oder Tieres andererseits, ein elektrischer Verbschiebungsstrom fließt; es muss nicht zwangsläufig ein ladungsträgerbasierter elektrischer Strom fließen.

JP 2011 072452 A offenbart auch einen Teil des Anspruchs 1.

Die der Erfindung zu Grunde liegende Aufgabe besteht darin, automatische Überwachung und Dokumentation von freiwilligen Verhaltensweisen von Tieren einer Tierherde unter strenger Beachtung von Wirtschaftlichkeit, exakter und besser verlässlicher durchführbar zu machen als dies mit den beschriebenen Methoden bisher möglich ist.

Für das Lösen der Aufgabe wird vorgeschlagen, ein mehrere Knoten und eine Datenverarbeitungsanlage aufweisendes elektronisches Kommunikationsnetzwerk anzuwenden, wobei
- die einzelnen Knoten, welche Sender und/oder Empfänger sein können, eine eindeutige Identifikationssignatur aufweisen,
- wobei an einem zu überwachenden Tier ein Knoten angebraucht ist,
- wobei an einem oder mehreren anderen Körpern, welche das Tier im Zuge von zu überwachenden freiwilligen Verhaltensweisen berührt und/oder welchen das Tier im Zuge von zu überwachenden freiwilligen Verhaltensweisen sehr nahe kommt, ein weiterer Knoten angebracht ist,
- wobei die beiden Knoten dazu ausgelegt sind, miteinander durch BCC über den Körper des zu überwachenden Tieres als Teil des Stromkreises zu kommunizieren, sobald sich das Tier an den zweiten Knoten nah angenähert hat,
- wobei von einem der beiden Knoten im Fall der Kommunikation mit dem anderen Knoten die Identifikationssignatur an den anderen Knoten übertragen wird,
- wobei durch den zweiten Knoten, beide Identifikationssignaturen an eine Datenverarbeitungsanlage übertragen werden.

BCC fähige Knoten sind sehr kostengünstig bereitstellbar. Durch die Verwendung von BCC ist das Feststellen der Anwesenheit eines Tieres, welches mit einem BCC-fähigen Knoten ausgestattet ist, an einem anderen Körper, welcher ebenfalls mit einem BCC-fähigen Körper ausgestattet ist, sehr gut verlässlich, eindeutig und störsicher feststellbar. Der zweite Körper kann ein Gerät wie beispielsweise eine Tränke, ein Futterautomat, ein Tor oder ein Melkroboter sein, oder auch ein anderes Tier.

Die Erfindung wird an Hand einer Skizze weiter erläutert:

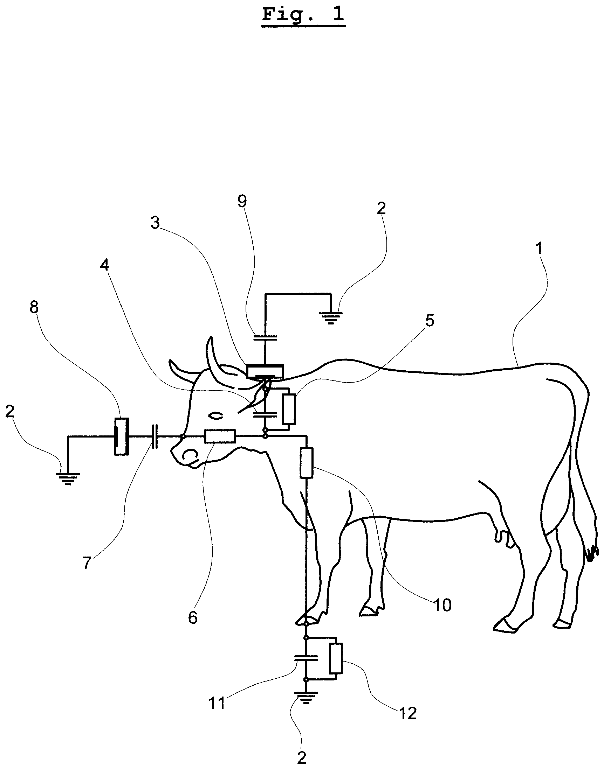

- Fig. 1:: zeigt am Beispiel einer Kuh, als dem zu überwachenden Tier, ein Ersatzschaltbild für einen Teil eines erfindungsgemäßen Datennetzwerkes.

In dem Ersatzschaltbild gemäß Fig. 1 sind (wie im Prinzip bei jedem Ersatzschaltbild) einige komplexe reale elektrische Schaltungselemente, durch ideale elektrische Schaltungselemente, nämlich ideale Kapazitäten und ideale ohmsche Widerstände ersetzt, was gegenüber der Realität zwar eine Vereinfachung darstellt aber die für das Verständnis der Funktion wesentlichen Erkenntnisse zulässt und erleichtert.

Am Beispiel gemäß Fig. 1 befindet sich die Kuh 1 in einer Umgebung, welche im Sinne der elektrischen Schaltungstechnik als Masse 2 symbolisiert ist. Die Kuh 1 trägt eine Ohrmarke 3, welche ein Knoten im erfindungsgemäßen Datennetzwerk ist und in dem hier beschriebenen Beispiel Sender und Empfänger sein kann. Ein weiterer Knoten 8 des Datennetzwerkes ist in diesem Beispiel in der Umgebung ortsfest fix montiert, beispielsweise an einer Tränke für die Kuh 1.

Die Ohrmarke 3, weist zwei Anschlusselektroden auf. Eine erste Anschlusselektrode liegt an der Kuh 1 an und stellt eine direkte elektrische Verbindung zwischen dem Körper der Kuh 1 und einer Schaltung in der Ohrmarke 3 dar. Die Impedanz an der Kontaktstelle zwischen Kuh 1 und Ohrmarke 3 ist im Ersatzschaltbild als Parallelschaltung einer Kapazität 4 mit einem ohmschen Widerstand 5 repräsentiert. Ein weiterer ohmscher Widerstand 6 symbolisiert den Leitungswiderstand im Körper der Kuh 1 zu jenem Oberflächenbereich hin, mit welchem sich die Kuh 1 dem zweiten Knoten 8 zuwendet. Die Oberfläche der Kuh 1 und eine der beiden Anschlusselektroden des Knotens 8 sind im Sinne der elektrischen Schaltungstechnik Elektroden einer Kapazität 7 zu welcher im Wesentlichen die zwischen Kuh 1 und Knoten 8 befindliche Luft das Dielektrikum bildet. Die zweite Elektrode des Knotens 8 ist mit Masse 2 verbunden.

Die zweite Elektrode der Ohrmarke 3 (bzw. genauer: "der in der Ohrmarke 3 enthaltenen Schaltung") liegt an der von der Kuh 1 abgewandten Seite der Ohrmarke 3 und sie ist möglichst großflächig ausgeführt. Sie bildet eine Elektrode der Kapazität 9, welche zwischen der Ohrmarke 3 und Masse 2 liegt. Das Dielektrikum dieser Kapazität ist wiederum im Wesentlichen Luft.

Stromfluss, welcher von einem der Knoten 3, 8 bestimmungsgemäß in den Körper der Kuh 1 hin eingeleitet wird, wird sich leider nicht vollständig über den jeweils anderen Knoten 8, 3 zu Masse hin schließen, sondern zu einem erheblichen Teil auch über einen Leitungszweig am jeweils zweiten Knoten vorbei. Dieser Leitungszweig ist durch die ohmschen Widerstände 10, 12 und die Kapazität 11 repräsentiert. Dabei bedeutet der Widerstand 10 den ohmschen Widerstand bei Stromfluss im Körper der Kuh 1. Die Kapazität 11 und der ohmsche Widerstand 12 repräsentieren die Impedanz im Bereich zwischen Kuh 1 und Masse 2.

In einer weiteren Verbesserungsstufe des Ersatzschaltbildes könnte parallel zur Kapazität 7 auch ein ohmscher Widerstand angenommen werden, welcher den Kontaktwiderstand repräsentiert, wenn die Kuh 1 die Elektrode am Knoten 8 direkt berührt.

Der erfindungsgemäße praktische Betrieb kann gemäß folgenden Beispielen ablaufen:

### Beispiel 1 (Trinküberwachung):

Knoten 8 ist an einer Tränke angebracht. Er ist im Netzwerk ein Sender. Als Sender legt er ständig in kurzen, sich wiederholenden Intervallen, beispielsweise alle 0,1 Sekunden 0,01 Sekunden lang, zwischen seinen beiden Elektroden ein Wechselspannungssignal an. Die Frequenz der Wechselspannung ist jene die für die Datenübertragung durch BCC vorgesehen ist, beispielsweise 20 kHz; die maximale Amplitude der Spannung liegt beispielsweise bei 0,5 V. In den jeweils 0,1 Sekunden schwankt die Amplitude der Spannung entsprechend einem Binärcode und signalisiert so wiederholt eine Kennzahl, welche eine Identifikationssignatur des Knotens 8 darstellt. Die Ohrmarke 3 ist in dem für BCC vorgesehene Frequenzbereich auf Empfang geschaltet. Sie stellt damit einen Spannungssensor dar, welcher misst, ob im relevanten Frequenzband Spannungssignale ankommen, deren Amplitude über einem vorgegebenem Schwellwert, beispielsweise 2 µV liegt.

So lange sich die Kuh 1 nicht im Nahbereich des Knotens 8 befindet, kann die Ohrmarke 3 kein entsprechend starkes Spannungssignal detektieren. Die Kuh 1 gilt als vom Knoten 8 entfernt.

Sobald sich die Kuh 1 an den Knoten 8 annähert, steigt die Kapazität 7, womit vermehrt elektrischer Strom in den Körper der Kuh 1 eingekoppelt wird, womit die an der Ohrmarke 3 zu messende Spannung steigt. Sobald der Abstand zwischen Kuh 1 und Knoten 8 weniger als beispielsweise 10 cm beträgt ist die an der Ohrmarke 3 zu messende Spannung so weit angestiegen, dass der besagte Schwellwert überschritten ist. Die Ohrmarke 3 schaltet auf Dekodieren des mit der Spannung gesendeten binären Signals und erkennt die Identifikationssignatur des Knotens 8. (Wenn die Kuh 1 den Kontakt am Knoten 8 direkt berührt ist der Kondensator 7 überbrückt und es wird erst recht stark Strom vom Knoten 8 aus in den Körper der Kuh eingekoppelt.)

Sobald die Ohrmarke 3 ohne Unterbrechung die Identifikationssignatur des Knotens 8 regelmäßig decodieren konnte, baut die Ohrmarke 3 eine Funkverbindung zu einer zum Datennetzwerk gehörenden, zentralen Datenverarbeitungsanlage auf und sendet an die Datenverarbeitungsanlage sowohl eine eigene Identifikationssignatur als auch die Identifikationssignatur des Knotens 8.

Die zentrale Datenverarbeitungsanlage registriert damit, dass zum gegebenen Zeitpunkt die Kuh 1, welche die Ohrmarke 3 trägt, an jener Tränke ist, an welcher sich der Knoten 8 befindet.

So lange sich die Kuh 1 an der Tränke mit dem Knoten 8 befindet, wird in festgelegten Zeitintervallen das Senden von der Ohrmarke 3 an die zentrale Datenverarbeitungsanlage wiederholt, womit in der Datenverarbeitungsanlage auch registriert wird, wie lange die Kuh 1 an der betreffenden Tränke ist.

Die Datenverarbeitungsanlage führt im Lauf der Zeit eine Statistik, wie oft und wie lange die Kuh 1 an der Tränke 8 ist. In Abhängigkeit von datentechnisch hinterlegten Regeln gibt sie dann eine Meldung aus, wenn die Kuh 1 über einen gewissen Zeitraum zu viel oder zu wenig an der Tränke war, da das als Grund zu Besorgnis über den Gesundheitszustand der Kuh interpretiert werden kann. Im Fall, dass auf einer Weide mehrere Tränken mit jeweils einem individuellen Knoten des Datennetzwerks ausgestattet sind, kann auch erkannt werden, wie die Kuh 1 zwischen den einzelnen Tränken wandert und welche Tränken bevorzugt oder gemieden werden.

Die besagte Funkverbindung zwischen der Ohrmarke 3 und der zentralen Datenverarbeitungsanlage braucht nicht auf der Frequenz von BCC und auch gar nicht per BCC zu erfolgen. Es kann beispielsweise ein üblicher drahtloser Funkstandard verwendet werden. Das bietet sich insbesondere dann an, wenn die Ohrmarke ohnedies auch für andere als die hier besprochenen Funktionen ausgelegt ist und dazu auch dazu ausgelegt ist, per Funk mit einer zentralen Datenverarbeitungsanlage zu kommunizieren. Eine typische dieser anderen Funktionen einer Ohrmarke ist es, Knoten in einem Funkortungssystem zu sein, welches dazu dient, den Standort der Kuh 1 auf einer Weide jederzeit feststellen zu können.

In der praktischen Realität wird das Datennetzwerk nicht nur zwei Knoten umfassen, sondern es werden viele Kühe mit Ohrmarken Teil des Datennetzwerkes sein und es wird eine Mehrzahl von stationären Knoten an Tränken, Futterstellen, Melkständen, Toren etc. geben, sodass viele Verhaltensweisen vieler Tiere überwacht werden. Wenn es vorkommen kann, dass eine Kuh 1 neben dem Knoten den sie selbst als Ohrmarke 3 trägt, noch mit mehr als einem einzigen weiteren Knoten in Kontakt kommt bzw. in deren engen Nahbereich gerät, so sind Maßnahmen vorzusehen um die unterschiedlichen Knoten unterscheiden zu können.

Beispielsweise kann eingestellt sein, dass das Senden der Knoten per BCC auf unterschiedlichen Frequenzen erfolgt und dass der empfangende Knoten frequenzselektiv empfängt und dekodiert, sodass er gleichzeitig Kontakte zu mehreren unterschiedlichen Knoten feststellen kann und die anderen Knoten identifizieren kann.

Es kann aber auch vorgesehen und an empfangenden Knoten einprogrammiert sein, dass dann, wenn per BCC gleichzeitig von mehreren sendenden Knoten empfangen wird, die Empfindlichkeit so lange verringert wird, - also die Verstärkung der empfangenen Signale vor dem Decodieren so lange verringert wird - bis nur mehr Signale von einem einzigen Knoten, nämlich dem, von dem die höchste Signalstärke empfangen wird, decodiert werden. So erhält man zumindest nach klaren Regeln ein eindeutiges Ergebnis. Beispielsweise kann aber auch jedem Knoten im Netzwerk innerhalb eines für alle Knoten geltenden zeitlichen Taktes, ein individuelles Zeitfenster zugeordnet sein, zu welchem nur jeweils dieser eine Knoten sendet, sodass also von vornherein vermieden ist, dass mehrere Knoten gleichzeitig senden und damit nicht zu decodierende Signalfolgen empfangen werden könnten. Auch damit ist erreichbar, dass ein Knoten den gleichzeitigen Kontakt mit anderen Knoten feststellen kann und die anderen Knoten identifizieren kann.

Die letztgenannte Methode bietet auf Grund des für alle Knoten geltenden zeitlichen Taktes den zusätzlichen Vorteil, dass dann wenn ein zweiter Knoten ein Signal von einem ersten Knoten empfängt an Hand des Vergleichs des Zeitpunktes des Empfanges mit dem durch den gemeinsamen Takt bekannten Zeitpunkt des Aussenden des Signals, die Laufzeit der Signalübertragung bestimmt werden kann. Damit kann beispielsweise Erkennt werden, ob der Körperbereich mit dem sich ein Tier an einen Knoten annähert eher der Kopf des Tieres oder eher der Hinterteil des Tieres ist. Außerdem ist es damit auch eine Reihung von Tieren erkennbar, wenn im Gedränge mehrere Tiere einander berühren und eines der Tiere in den Nahbereich eines ortsfesten Knotens kommt.

### Beispiel 2 (Melküberwachung):

Knoten 8 gemäß Fig. 1 sind an Zitzenbechern von Melkrobotern angebracht. Dabei ist die auf BCC basierende Sendeleistung so gering eingestellt, dass nur dann, wenn ein mit einem Knoten 8 ausgestatteter Zitzenbecher tatsächlich an einer Zitze einer Kuh 1 anliegt, an der Ohrmarke 3 detektiert wird, dass Verbindung zum Knoten 8 besteht.

Auf diese Weise ist sehr eindeutig und sehr direkt automatisch überwachbar, wann welche Kuh wie lange durch welchen Melkroboter bzw. mittels welchem Zitzenbecher eines Melkroboters gemolken wird. Auf Basis dieser Daten kann das Erfordernis für verschiedene weitere Handlungen automatisch erkannt werden.

Beispielsweise kann der Melkroboter an der Zitze kurz vormelken, dann die gemolkene Milch untersuchen (beispielsweise optisch auf Färbung oder auf Flocken), und dann entscheiden ob die Milch einen Hinweis auf eine Erkrankung beinhaltet oder nicht und in Abhängigkeit davon entweder melken oder nicht melken und eine Meldung machen, wobei die Meldung auch die Bekanntgabe der Identität des betroffenen Zitzenbechers beinhaltet und die Milchprobe gesichert wird.

### Beispiel 3 (Zugangskontrolle zu Melkstand):

Knoten 8 ist an einem steuerbaren Tor angebracht, welches den Eingang zu einem Melkstand bildet. Wenn eine Kuh 1 den Melkstand betreten will, nähert sie sich dem Knoten 8 so sehr, dass, wie schon am Beispiel 1 beschrieben, Knoten 8 durch die Ohrmarke 3 der Kuh 1 erkannt wird und die zentrale Datenverarbeitungsanlage darüber informiert wird. In Abhängigkeit von einprogrammierten Vorgaben und Daten die über die Kuh in der Datenverarbeitungsanlage schon vorliegen, wird durch die zentrale Datenverarbeitungsanlage das Tor geöffnet und damit Melken ermöglicht oder das Tor geschlossen gehalten und damit Melken verweigert (- und eventuell die Kuh durch eine diesbezügliche Maßnahme angeregt oder gedrängt den Torbereich zu verlassen).

Diese Methode der Zugangskontrolle ist bei deutlich verlässlicher zutreffenden Detektionsergebnissen wesentlich kostengünstiger als die Identifizierung mit RFID-Sensoren die an Toren etc. angebracht sind und mit RFID-Tag's an Tieren korrespondieren.

### Beispiel 4 (Brunsterkennung):

Alle Rinder einer Herde sind mit Ohrmarken 3 ausgestattet, welche jeweils Knoten des Datennetzwerkes sind und nach dem BCC-Prinzip sowohl Sender als auch Empfänger sind und in unterschiedlichen Frequenzen (- die zueinander keine ganzzahligen Verhältnisse haben) zwischen Sendezustand und Empfangsbereitschaftszustand hin und her schalten. Eine Kuh nimmt mit einem weiteren Rind Körperkontakt auf, beispielsweise indem sie mit ihrem Kinnbereich am Rücken des weiteren Rindes reibt. Entsprechend dem in Beispiel 1 beschriebenen Ablauf wird dieser Kontakt - und auch seine Dauer - durch jene Ohrmarke von einem der beiden Rinder, welche gerade auf Empfangsbereitschaft ist, detektiert und der Kontakt jener beiden Knoten des Datennetzwerkes, welche die beiden Ohrmarken der beiden Rinder darstellen, wird durch die zentrale Datenverarbeitungsanlage erfasst. In der Datenverarbeitungsanlage wird damit die Häufigkeit von Kontakten zwischen den Rindern erfasst und überwachbar. Dabei kann durch die Datenverarbeitungsanlage eine statistische Kontakthäufigkeit pro Zeiteinheit erfasst und deren Verlauf verfolgt werden. Häufungen von Körperkontakt der Kuh zu anderen Rindern können damit rasch erkannt werden; sie sind ein starkes Indiz dafür, dass die Kuh brünstig ist. Die Kuh kann somit dahingehend überwacht werden, den optimalen Zeitpunkt für eine Besamung rechtzeitig zu bemerken. Gegebenenfalls kann durch die Datenverarbeitungsanlage eine Meldung gemacht werden oder die Kuh kann an einem durch die Datenverarbeitungsanlage erfindungsgemäß überwachten steuerbaren Tor Zugang zu einem Areal bekommen in welchem die brünstigen, zu besamenden Kühe gesammelt werden.

Das Erkennen ob ein Kontakt zwischen Tieren wahrscheinlich etwas mit Brunst zu tun hat, kann durch die oben erwähnte Methode mit gemeinsamem zeitlichen Takt aller Knoten verbessert werden. Es sind dann nämlich auch die Laufzeiten von Signalen zwischen den Ohrmarken von zwei Tieren die einander berühren, feststellbar. Damit sind Berührungen zwischen dem vorderen Bereich eines Tieres und dem hinteren Bereich eines anderen Tieres - wie es für die Brunst typisch ist - von anderen Berührungen zwischen zwei Tieren unterscheidbar.

### Beispiel 5 (Bolus als Knoten):

Ein Tier nimmt einen Bolus in seinen Körper auf, indem es ihn verschluckt. Der Bolus ist ein Knoten 8, welcher an seiner Außenseite an zwei möglichst weit voneinander beabstandeten Stellen jeweils eine Anschlusselektrode aufweist. So lange sich der Bolus im Körper des Tieres befindet, generiert Wechselspannung zwischen den beiden Anschlusselektroden ein - sehr abgeschwächtes - Signal an der Ohrmarke 3. Sobald der Bolus von dem Tier ausgeschieden wurde, ist an der Ohrmarke 3 kein Signal feststellbar. Auf diese Weise kann Verdauungstätigkeit überwacht werden. Der Bolus kann auch verschiedene Sensoren und eine Datenspeichervorrichtung beinhalten. Nach dem Ausscheiden aus dem Tier kann der Bolus aufgesammelt werden und sein Datenspeicher ausgelesen werden.

### Beispiel 6 (Zuordnung Ferkel zu Sau)

Nachdem ein mit einer BCC-fähigen Ohrmarke versehenes Mutterschwein Ferkel geboren hat, werden diese mit einer Ohrmarke versehen welche BCC-fähig ist und eine eindeutige Identitätssignatur hat. (Ansonsten können die Ohrmarken für Ferkel sparsamer, kurzlebiger kleiner und einfacher aufgebaut sein als die länger einzusetzenden Ohrmarken für Zuchtsauen.) Wie an Hand der Brunsterkennung gemäß obigem Beispiel 4 erläutert, kann damit Körperkontakt eines Ferkels mit einer Sau detektiert und dokumentiert werden. Damit wird auch automatisch eine Dokumentation dazu angelegt, wenn ein Ferkel von einer weggenommen wird und zu einer anderen Sau - die mit einem eigenen Wurf in einer anderen Box angeordnet ist - gebracht wird. (Das ist typischerweise dann der Fall, wenn zwei Sauen etwa gleichzeitig sehr unterschiedlich große Würfe abgeferkelt haben, sodass eine Sau tendenziell überlastet ist und die zweite Sau ein zusätzliches Ferkel leichter erträgt.)

### Beispiel 7 (Zuordnung Sau zu Abferkelbox)

Sobald absehbar wird, dass der Termin des Abferkelns für eine trächtige Sau heranrückt, wird die Sau in eine eigens dafür vorgesehene Abferkelbox gebracht. Die Sau ist mit einer BCC-fähigen Ohrmarke, welche eine eindeutige Identitätssignatur hat, versehen und auch in der Abferkelbox sind eine oder mehrere BCC-fähige Knoten mit eindeutiger Identitätssignatur angebracht, typischerweise an der Futterstelle. Durch die überwachende zentrale Datenverarbeitungsanlage ist damit automatisch erkennbar welche Sau in welcher Abferkelbox ist, was das Auffinden von Sauen die Betreuung brauchen sehr vereinfacht. Wenn in der Box an mehreren Stellen BCC-fähige Knoten angebracht sind, kann auf das Verhalten der Sau automatisch noch näher rückgeschlossen werden, sodass Häufigkeit des Bewegens, des Liegens, des Fressens etc. automatisch erkannt werden kann und damit der Startzeitpunkt des Geburtsvorganges gut detektiert werden kann.

Über die genannten Beispiele hinaus gibt es sicherlich noch eine Vielzahl weiterer erfindungsgemäßer Anwendungsfälle für das erfindungsgemäße Datennetzwerk - also zur Überwachung von freiwilligen Verhaltensweisen von Tieren 1.

Wesentlich ist, dass es zu einer zu überwachenden Verhaltensweise des Tieres einen Ort gibt, dem das Tier genau dann besonders bevorzugt nahe kommt und dass an diesem Ort ein Knoten 8 so angebracht wird, dass die beschriebene elektronische Kommunikation zwischen zwei Knoten 8, 3 bei der der Körper des Tieres als elektrischen Leiter mit einbezogen wird, stattfinden kann.

Das erfindungsgemäß einsetzbare Datennetzwerk ist darüber hinaus uneingeschränkt für den schon aus dem Stand der Technik bekannten Zweck einsetzbar, bei medizinischen Manipulationen an Tieren, Kontakt von Tieren mit medizinischen Geräten und/oder mit handelnden Menschen die mit einem Knoten des Datennetzwerk ausgestattet sind zu protokollieren.

In einer besonders vorteilhaften Weiterentwicklung werden in dem Datennetzwerk nicht nur Daten bezüglich Annäherungen und Berührungen von Tieren die Knoten tragen mit anderen Tieren bzw. Vorrichtungen die auch mit Knoten ausgestattet sind, gemessen und übertragen, sondern es werden auch Beschleunigungsdaten gemessen und übertragen. Typischerweise ist dazu eine Ohrmarke mit einem Beschleunigungssensor (welcher im Idealfall mehrdimensional misst) ausgestattet und die gemessenen Beschleunigungsdaten werden per Funk an die zentrale Datenverarbeitungsanlage übertragen. Damit erschließt sich die Möglichkeit bei durch Brunst motivierter Berührung zwischen zwei Rindern zu erkennen, welches der beiden Rinder das passivere Tier ist und welches das aktivere. Beim passiveren Tier sind im Zeitbereich der Berührung die gemessenen Beschleunigungswerte niedriger als beim aktiveren Tier. Damit kann der optimale Zeitpunkt für das Besamen einer brünstigen Kuh sehr genau detektiert werden, weil das genau dann ist, wenn die Kuh nach einer aktiveren Phase eine passive Phase einnimmt und dabei gern von anderen Rindern berührt wird.

## Patentansprüche

1. Datennetzwerk für die automatische Überwachung von freiwilligen Verhaltensweisen einzelner Tiere einer Tierherde, wobei das Datennetzwerk mehrere Knoten (3, 8) und eine zentrale Datenverarbeitungsanlage aufweist, wobei die einzelnen Knoten (3, 8) Sender und/oder Empfänger im Datennetzwerk sind und eine eindeutige Identifikationssignatur aufweisen, wobei an einem zu überwachenden Tier (1) der Knoten (3) angebracht ist, wobei an einem oder mehreren anderen Körpern, welchen das Tier (1) im Zuge von zu überwachenden freiwilligen Verhaltensweisen sehr nahe kommt oder diese berührt, der weitere Knoten (8) angebracht ist, wobei zwischen den beiden Knoten (3, 8) auf elektronischem Weg eine Kommunikation stattfindet sobald das Tier in den Nahbereich des Knotens (8) gelangt, wobei von einem der beiden Knoten (3, 8) im Fall der Kommunikation mit dem anderen Knoten die Identifikationssignatur an den anderen Knoten (8, 3) übertragen wird, wobei durch jenen Knoten (3), welcher die Identifikationssignatur des anderen Knotens (8) empfangen hat, die Identifikationssignaturen beider Knoten (3, 8) an die Datenverarbeitungsanlage übertragen werden, wobei die beiden Knoten (3, 8) jeweils zwei Anschlusselektroden aufweisen und dazu ausgelegt sind miteinander durch Austausch von elektrischen Signalen in einem geschlossenen elektrischen Wechselstromkreis zu kommunizieren, welcher über jeweils zwei Anschlusselektroden sowie über den Körper des Tieres (1) als elektrischen Leiter, sowie über Erde (2) sowie über eine Kapazität (9) verläuft, welche zwischen einer Anschlusselektrode des einen Knotens (3) und Erde (2) liegt und wobei die zweite Anschlusselektrode des Knotens (3) im Stromkreis den Kontakt mit dem Körper des Tieres (1) bildet und wobei eine Anschlusselektrode des zweiten Knotens (8) im Stromkreis an der Seite des Tieres (1) liegt und die zweite Anschlusselektrode dieses Knotens (8) zumindest mittelbar die Verbindung zu Erde (2) darstellt.

2. Datennetzwerk nach Anspruch 1, **dadurch gekennzeichnet, dass** ein Knoten (3, 8) dazu befähigt ist, per Funk mit der Datenverarbeitungsanlage zu kommunizieren.

3. Datennetzwerk nach Anspruch 1 oder 2, **dadurch gekennzeichnet, dass** alle Knoten (3, 8) in einem gemeinsamen Takt synchronisiert sind in welchem Zeitpunkt festgelegt sind, wann von welchem Knoten (3, 8) aus in dem den Körper eines Tieres mit einschließenden Wechselstromkreis elektrischen Signale ausgesandt werden.

4. Datennetzwerk nach einem der Ansprüche 1 bis 3, **dadurch gekennzeichnet, dass** der Knoten (8) an einer Viehtränke angebracht ist und dass die Datenverarbeitungsanlage dazu dient, das Trinkverhalten des Tieres (1) zu kontrollieren und/oder die Auslastung der Viehtränke zu kontrollieren.

5. Datennetzwerk nach einem der Ansprüche 1 bis 3, **dadurch gekennzeichnet, dass** der Knoten (8) an einer Futterstelle angebracht ist und dass die Datenverarbeitungsanlage dazu dient, das Fressverhalten des Tieres (1) zu kontrollieren.

6. Datennetzwerk nach einem der Ansprüche 1 bis 3, **dadurch gekennzeichnet, dass** der Knoten (8) an einem Melkstand angebracht ist und dass die Datenverarbeitungsanlage dazu dient, das Melkverhalten des Tieres (1) zu kontrollieren.

7. Datennetzwerk nach einem der Ansprüche 1 bis 3, **dadurch gekennzeichnet, dass** der Knoten (8) an einem Zitzenbecher eines Melkroboters angebracht ist und dazu dient den Kontakt des Zitzenbechers zu individuellen Zitzen eines zu melkenden Tieres zu dokumentieren.

8. Datennetzwerk nach einem der Ansprüche 1 bis 3, **dadurch gekennzeichnet, dass** der Knoten (8) an einem zweiten Tier angebracht ist und dass die Datenverarbeitungsanlage dazu dient, das Berührungsverhalten der beiden Tiere (1) zu kontrollieren.

9. Datennetzwerk nach Anspruch 8, **dadurch gekennzeichnet, dass** durch die Datenverarbeitungsanlage das Berührungsverhalten zwischen den Tieren danach kontrolliert wird ob die Häufigkeit von Berührungen zu manchen Zeiten gegenüber anderen Zeiten signifikant anwächst und dass gegebenenfalls eine Meldung ausgegeben wird, welche auf eine mögliche Brünstigkeit eines Tieres hinweist.

10. Datennetzwerk nach Anspruch 9, **dadurch gekennzeichnet, dass** durch die Datenverarbeitungsanlage auch Beschleunigungsdaten die an Tieren gemessen werden verarbeitet werden und in Abhängigkeit von diesen Daten die Entscheidung ob Brünstigkeit und/oder optimaler Besamungszeitpunkt vorliegt, mit beeinflusst wird.

11. Datennetzwerk nach Anspruch 8, **dadurch gekennzeichnet, dass** eine Sau und Ferkel jeweils mit Knoten (3) ausgestattet sind und dass das Datennetzwerk dazu dient, Zusammengehörigkeit eines Ferkels mit einer Sau zu dokumentieren.

12. Datennetzwerk nach einem der Ansprüche 1 bis 3, **dadurch gekennzeichnet, dass** der Knoten (3) an einer trächtigen Sau angebracht ist und dass ein oder mehrere der Knoten (8) in einer Abferkelbox angebracht sind, welche dazu vorgesehen ist, für die Sau ein geschützter Ort für das Abferkeln zu sein.

## Claims

1. Data network for automatic monitoring of voluntary behaviour of individual animals of an animal herd, wherein the data network comprises multiple nodes (3, 8) and a central data processing system, wherein the individual nodes (3, 8) are transmitters and/or receivers in the data network with a unique identification signature, wherein the node (3) is mounted on an animal (1) to be monitored, wherein an additional node (8) is attached to one or more other bodies, which the animal (1) approximates very closely or touches in the course of voluntary behaviour to be monitored, wherein communication between the two nodes (3, 8) takes place electronically as soon as the animal reaches the vicinity of the node (8), wherein, in the event of communication with the other node, the identification signature is transmitted from one of the two nodes (3, 8) to the other node (8, 3), whereby that node (3), which received the identification signature of the other node (8), causes the identification signatures of both nodes (3, 8) to be transmitted to the data processing system,
**characterised in that**
the two nodes (3, 8) have two connection electrodes respectively and are designed to communicate with one another by exchanging electrical signals in a closed electrical AC circuit, which runs through two connection electrodes and the body of the animal (1) as an electrical conductor, as well as through earth (2) and a capacitance (9) which lies between a connection electrode of the one node (3) and earth (2) and wherein the second connection electrode of the node (3) within the circuit forms the contact with the body of the animal (1), and wherein a connection electrode of the second node (8) lies in the current circuit of the animal (1) and the second connection electrode of this node (8) at least indirectly represents the connection to earth (2).

2. Data network according to claim 1, **characterised by** the fact that a node (3, 8) is capable of communicating by radio with the data processing system.

3. A data network according to claim 1 or 2, **characterised by** the fact that all nodes (3, 8) are synchronised to a common clock, which contains the instructions at which time from which node (3, 8) electric signals from the body of an animal with enclosing AC circuit are sent.

4. Data network according to one of claims 1 to 3, **characterised by** the fact that the node (8) is attached to a livestock drinking trough and that the data processing system is used to monitor the drinking behaviour of the animal (1) and/or to control the capacity of the livestock drinking trough.

5. Data network according to one of claims 1 to 3, **characterised by** the fact that the node (8) is attached to a feeding station and that the data processing system is used to monitor the eating behaviour of the animal (1).

6. Data network according to one of claims 1 to 3, **characterised by** the fact that the node (8) is attached to a milking station and that the data processing system is used to monitor the milking behaviour of the animal (1).

7. Data network according to one of claims 1 to 3, **characterised by** the fact that the node (8) is attached to a teat cup of a milking robot and serves to document the contact of the teat cup to individual teats of an animal to be milked.

8. Data network according to one of claims 1 to 3, **characterised by** the fact that the node (8) is attached to a second animal and that the data processing system is used to monitor the contact pattern of both animals (1).

9. Data network according to claim 8, **characterised by** the fact that the contact pattern between the animals is monitored by the data processing system to document whether the contact frequency significantly increases at some times over other times and that, potentially, a message is generated, which indicates a possible oestrus cycle of an animal.

10. Data network according to claim 9, **characterised by** the fact that acceleration data, which are measured on animals, are processed by the data processing system and that, depending on these data, the decision whether an oestrus cycle and/or optimum insemination time is present is also influenced.

11. Data network according to claim 8, **characterised by** the fact that a sow and piglets are each equipped with nodes (3) and that the data network is used to document the common bond between a pig and a sow.

12. Data network according to one of claims 1 to 3, **characterised by** the fact that the node (3) is attached to a pregnant sow and that one or more of the nodes (8) are mounted on a farrowing crate intended to be a sheltered place for the sow to have a litter.

## Revendications

1. Réseau de données pour la surveillance automatique de comportements volontaires d'animaux individuels d'un troupeau d'animaux, le réseau de données présentant plusieurs noeuds (3, 8) et un équipement centralisé de traitement de données, chacun des noeuds (3, 8) étant un émetteur et/ou récepteur dans le réseau de données et présentant une signature d'identification claire, le noeud (3) étant placé sur l'animal (1) à surveiller, l'autre noeud (8) étant placé sur un ou plusieurs autres éléments que l'animal (1) approche de très près ou touche dans le cadre des comportements volontaires à surveiller, une communication ayant lieu entre les deux noeuds (3, 8) d'une manière électronique dès que l'animal arrive à proximité du noeud (8), la signature d'identification étant transmise de l'un des deux noeuds (3, 8) en cas de communication avec l'autre noeud (8,3), les signatures d'identification des deux noeuds (3, 8) étant transmises à l'équipement de traitement de données par le noeud (3) ayant reçu la signature d'identification de l'autre noeud (8),
**caractérisé en ce que**
les deux noeuds (3,8) présentant respectivement deux électrodes de raccordement sont conçus pour communiquer l'un avec l'autre par l'échange de signaux électriques dans un circuit de courant alternatif électrique fermé, passant respectivement par deux électrodes de raccordement ainsi que par le corps de l'animal (1) en tant que conducteur électrique, ainsi que par la terre (2) ainsi que par une capacité (9), reposant entre une électrode de raccordement d'un noeud (3) et la terre (2) et la deuxième électrode de raccordement du noeud (3) dans le circuit de courant formant le contact avec le corps de l'animal (1) et une électrode de raccordement du deuxième noeud (8) dans le circuit de courant reposant sur le flanc de l'animal (1) et la deuxième électrode de raccordement de ce noeud (8) représentant du moins indirectement la liaison à la terre (2).

2. Réseau de données selon la revendication 1, **caractérisé en ce qu'**un noeud (3, 8) est en mesure de communiquer par radio avec l'équipement de traitement de données.

3. Réseau de données selon revendication la 1 ou 2, **caractérisé en ce que** tous les noeuds (3, 8) sont synchronisés à une cadence commune dans laquelle sont définis des moments où des signaux électriques sont émis à partir de quel noeud (3, 8) dans le circuit de courant alternatif intégré dans le corps d'un animal.

4. Réseau de données selon l'une des revendications 1 à 3, **caractérisé en ce que** le noeud (8) est placé sur un abreuvoir et que l'équipement de traitement de données sert à contrôler le comportement de désaltération de l'animal (1) et/ou à contrôler l'exploitation de l'abreuvoir.

5. Réseau de données selon l'une des revendications 1 à 3, **caractérisé en ce que** le noeud (8) est placé sur un point d'affouragement et que l'équipement de traitement de données sert à contrôler le comportement d'alimentation de l'animal (1) .

6. Réseau de données selon l'une des revendications 1 à 3, **caractérisé en ce que** le noeud (8) est placé sur une trayeuse et que l'équipement de traitement de données sert à contrôler le comportement de traite de l'animal (1).

7. Réseau de données selon l'une des revendications 1 à 3, **caractérisé en ce que** le noeud (8) est placé sur un gobelet trayeur d'un robot de traite et sert à documenter le contact du gobelet-trayeur à chaque mamelle d'un animal à traire.

8. Réseau de données selon l'une des revendications 1 à 3, **caractérisé en ce que** le noeud (8) est placé sur un deuxième animal et que l'équipement de traitement de données sert à contrôler le comportement de contact des deux animaux (1).

9. Réseau de données selon la revendication 8, caractérisé ce que le comportement de contact entre les animaux est ensuite contrôlé par l'équipement de traitement de données pour déterminer si la fréquence des contacts augmente significativement à certaines périodes par rapport à d'autres et en ce qu'un message est généré le cas échéant indiquant une possible période de chaleurs d'un animal.

10. Réseau de données selon la revendication 9, **caractérisé en ce que** des données d'accélération mesurées sur les animaux sont également traitées par l'équipement de traitement des données et en fonction de ces données, la décision sur la présence d'une période de chaleurs et/ou d'un moment optimal d'insémination est aussi influencée.

11. Réseau de données selon la revendication 8, **caractérisé en ce qu'**une truie et un porcelet sont respectivement équipés de noeuds (3) et que le réseau de données sert à documenter l'appartenance d'un porcelet avec une truie.

12. Réseau de données selon l'une des revendications 1 à 3, **caractérisé en ce que** le noeud (3) est placé sur une truie en gestation et qu'un ou plusieurs des noeuds (8) sont placés dans un box de mise bas prévu pour être pour la truie un endroit protégé pour la mise bas.
